# FASCICULE DE BREVET EUROPEEN

(11) **EP 2 483 451 B1**
(45) Date de publication et mention de la délivrance du brevet: **06.11.2013**
(21) Numéro de dépôt: 10773653.0
(22) Date de dépôt: 28.09.2010
(51) Int. Cl.: C25B 9/18, C25B 9/06, C25B 9/04, H01M 8/02, H01M 8/12

(54) **DISPOSITIF D'ELECTROLYSE**
ELEKTROLYSEGERÄT
ELECTROLYSIS DEVICE

(30) Priorité: 28.09.2009 FR 0956708
(43) Date de publication de la demande: 08.08.2012
(73) Titulaire: Areva, 75009 Paris (FR)
(72) Inventeur: TISSOT, Samuel, F-69006 Lyon (FR); SALLES, Thomas, F-69003 Lyon (FR)
(74) Mandataire: Lebkiri, Alexandre
(86) Numéro de dépôt international: PCT/FR2010/052034
(87) Numéro de publication internationale: WO 2011/036426

(56) Documents cités:
- WO-A-02/27813
- WO-A-2008/033452

## Description

La présente invention concerne un dispositif d'électrolyse tel que les électrolyseurs à haute température comportant une membrane à conduction anionique ou protonique.

L'invention concerne, plus particulièrement les électrolyseurs à haute température comportant un empilement d'assemblages élémentaires constitués d'une cathode, d'un électrolyte et d'une anode, séparés par des plaques bipolaires, également appelées interconnecteurs, assurant notamment la continuité électrique entre les différents assemblages élémentaires.

L'invention peut également concerner les piles à combustible, auxquels sont directement applicables les développements technologiques des électrolyseurs à haute température.

Les technologies actuelles des électrolyseurs à haute température, par exemple de type SOEC (Solid Oxyd Electrolyser Cell en langue anglaise) ou des piles à combustible, par exemple de type SOFC (Solid Oxyd Fuel Cell en langue anglaise), sont basées sur l'utilisation de deux électrodes poreuses, conductrices électriquement, séparées par un électrolyte à membrane isolant électriquement et conducteur ionique (anionique ou protonique), formant une structure appelée assemblage élémentaire.

Afin d'augmenter l'efficacité d'un tel assemblage, il est connu d'empiler et de connecter électriquement en série plusieurs assemblages élémentaires, les différents assemblages élémentaires étant séparés au moyen d'une plaque bipolaire ayant pour rôle de conduire l'électricité.

Chaque plaque bipolaire comporte une face en contact avec une face anodique de l'assemblage élémentaire, et une face en contact avec une face cathodique de l'assemblage élémentaire. Le dispositif d'électrolyse est formé par un empilement d'assemblages élémentaires, chaque assemblage élémentaire étant enserré entre deux plaques bipolaires, la première plaque bipolaire devant avoir un bon contact électrique avec la face cathodique de l'assemblage élémentaire et la deuxième plaque bipolaire devant avoir un bon contact électrique avec la face anodique du même assemblage élémentaire.

Outre la fonction d'assurer la continuité électrique entre les différents assemblages élémentaires au sein d'un dispositif d'électrolyse, les plaques bipolaires peuvent également assurer des fonctions supplémentaires telles que, par exemple, l'alimentation continue en réactifs et l'évacuation continue des produits aux niveaux des électrodes poreuses (anode et cathode).

Notons également que les plaques bipolaires peuvent en outre inclure des éléments de refroidissement pour faire face aux éventuelles surchauffes de l'empilement.

Les plaques bipolaires des électrolyseurs et des piles à combustible ont largement été développées durant ces dernières années, donnant lieu à diverses réalisations.

Pour que le dispositif d'électrolyse fonctionne dans des conditions satisfaisantes, et en particulier pour que sa résistance interne soit la plus faible possible, il est nécessaire que le contact électrique entre les plaques bipolaires et les assemblages élémentaires soit le meilleur possible. Cependant, compte tenu des tolérances géométriques de fabrication des plaques bipolaires, des dispersions de profondeur des canaux de distribution des réactifs et d'évacuation des produits, des défauts de planéité, et plus généralement des défauts géométriques de ces plaques, il est difficile de garantir des pressions de contact constantes entre les plaques bipolaires et les assemblages élémentaires, et en particulier des pressions uniformes sur toute la surface de contact entre les plaques bipolaires et les assemblages élémentaires.

Afin d'améliorer les contacts électriques entre les plaques bipolaires et les assemblages, le document FR2899386 propose un assemblage élémentaire d'une pile à combustible, inséré entre deux plaques bipolaires, comportant un élément conducteur électrique élastique, en particulier une bande métallique ondulée, disposé entre une plaque bipolaire et un assemblage élémentaire afin d'assurer un contact électrique en compensant les irrégularités géométriques ou dimensionnelles des plaques bipolaires et, ainsi assurer l'uniformité de la répartition de la pression de contact sur l'ensemble de la surface réactionnelle de l'assemblage élémentaire.

Cependant, ce type de dispositif d'électrolyse proposé ne permet pas d'assurer un contact électrique optimum lors des variations géométriques résultant des effets de la dilatation thermique.

De plus, la bande métallique ondulée, disposée entre chaque plaque bipolaire et un assemblage élémentaire a une fonction de « ressort » appliquant une pression constante et des contraintes importantes sur l'assemblage élémentaire, y compris à froid lorsque le dispositif d'électrolyse n'est pas en fonctionnement, diminuant ainsi sa durée de vie. Le document WO 2008 033452 décrit un dispositif d'éléctrolyse avec un assemblage élémentaire avec un élément conducteur formé d'une plaque ondulée et entouré partiellement d'un élément périphérique servant de joint.

Dans ce contexte, l'invention vise à résoudre les problèmes mentionnés ci-dessus et à améliorer le contact électrique entre la plaque bipolaire et l'assemblage élémentaire lors du fonctionnement à haute température d'un tel dispositif tout en réduisant les contraintes exercées sur l'assemblage élémentaire lorsque le dispositif n'est pas en fonctionnement.

A cette fin, l'invention propose un dispositif d'électrolyse comportant :
- un assemblage élémentaire formé par un élément membranaire entouré de part et d'autre par une électrode,
- une plaque conductrice rigide, et
- au moins un conducteur électrique inséré entre ledit assemblage élémentaire et ladite plaque conductrice rigide, ledit conducteur électrique étant formé par une plaque ondulée apte à se déformer et à assurer le contact électrique entre ledit assemblage élémentaire et ladite plaque conductrice rigide ;
ledit dispositif d'électrolyse étant caractérisé en ce qu'il comporte un élément périphérique entourant au moins partiellement ledit conducteur électrique, ledit élément périphérique étant réalisé dans un matériau dont le coefficient de dilatation thermique est inférieur au coefficient de dilatation thermique du matériau dudit conducteur électrique.

On entend par plaque ondulée, une plaque ou une tôle dont la section présente un mouvement oscillatoire (i.e. une ondulation) périodique, par exemple un mouvement de forme sinusoïdale, triangulaire, triangulaire écrêtée ou encore en créneau.

La forme périodique du conducteur électrique permet ainsi d'assurer une fonction élastique dans le sens de l'épaisseur du dispositif afin d'assurer un contact électrique entre les plaques bipolaires et les assemblages élémentaires malgré la présence d'irrégularités géométriques ou dimensionnelles des éléments constituant le dispositif d'électrolyse.

Grâce à l'invention, il est possible d'assurer un contact électrique entre les plaques bipolaires et les assemblages élémentaires à haute température (i.e. supérieure à 500°C) et de limiter les déformations par dilatation thermique du conducteur électrique notamment selon un axe parallèle à la direction de l'ondulation, une dilatation thermique importante selon un axe parallèle à la direction de l'ondulation du conducteur électrique pouvant occasionner des pertes de contact électrique.

A cet effet, l'élément périphérique entourant au moins partiellement le conducteur électrique et comportant un coefficient de dilatation thermique inférieur au coefficient de dilatation thermique du conducteur électrique permet de contenir les déformations par dilation thermique du conducteur électrique selon un plan parallèle à la surface plane des plaques bipolaire et des assemblages élémentaires.

De plus, le positionnement particulier de l'élément périphérique autour du conducteur électrique permet d'orienter la déformation par dilation thermique du conducteur électrique selon son épaisseur de façon à combler les éventuelles déformations des composants du dispositif par dilatation thermique et/ou les défauts et autres irrégularités géométriques de l'empilement et à assurer un contact électrique entre la plaque bipolaire et l'assemblage élémentaire.

Le dispositif d'électrolyse selon l'invention peut également présenter une ou plusieurs des caractéristiques ci-dessous, considérées individuellement ou selon toutes les combinaisons techniquement possibles :
- ledit élément périphérique est réalisé dans un matériau céramique ;
- ledit matériau céramique est une céramique de même formule brute que ledit élément membranaire ;
- ledit élément périphérique comporte une première ouverture et une deuxième ouverture agencées de part et d'autre dudit conducteur électrique, lesdites ouvertures autorisant la circulation d'un fluide au travers dudit conducteur électrique ;
- ledit élément périphérique est formé par deux portions d'anneaux se faisant face ;
- ledit élément périphérique est un anneau complet circulaire comportant deux portions de plus faible épaisseur se faisant face;
- ledit au moins un conducteur électrique est solidaire au moins partiellement dudit élément périphérique ;
- ledit élément périphérique solidarise au moins dix vagues dudit au moins un conducteur électrique ;
- ledit élément périphérique solidarise au moins les deux dernières vagues de chaque extrémité de l'ondulation dudit au moins un conducteur électrique ;
- ledit au moins un conducteur électrique comporte une section définissant un mouvement oscillatoire périodique de forme sinusoïdale ;
- ledit au moins un conducteur électrique comporte une section définissant un mouvement oscillatoire périodique de forme triangulaire ou triangulaire écrêtée ;
- ledit conducteur électrique est réalisé dans un matériau en alliage de Nickel et/ou en acier inoxydable ;
- ledit dispositif comporte une succession d'empilements formés par :
   - une plaque conductrice rigide ;
   - un premier conducteur électrique anodique en contact avec ladite plaque conductrice entouré au moins partiellement par un premier élément périphérique ;
   - un assemblage élémentaire formé par un élément membranaire entouré d'une anode et d'une cathode, ladite anode étant en contact avec ledit conducteur électrique anodique ;
   - un deuxième conducteur électrique cathodique en contact avec la cathode de l'assemblage élémentaire entouré au moins partiellement par un deuxième élément périphérique ;
- ledit premier élément périphérique comporte une première ouverture et une deuxième ouverture agencées de part et d'autre dudit premier conducteur électrique anodiqee ; ledit deuxième élément périphérique comporte une première ouverture et une deuxième ouverture agencées de part et d'autre dudit premier conducteur électrique cathodique ; ledit premier élément périphérique et ledit deuxième élément périphérique étant agencés de sorte que lesdites ouvertures dudit premier élément périphérique sont perpendiculaires aux dites ouvertures dudit deuxième élément périphérique.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 illustre une vue de dessus de la section d'un dispositif d'électrolyse selon l'invention comportant des lignes de coupes relatives aux figures suivantes ;
- la figure 2 illustre schématiquement une première coupe frontale du dispositif d'électrolyse de la figure 1 montrant un empilement d'assemblages élémentaires ;
- la figure 3 illustre schématiquement une deuxième coupe frontale du dispositif d'électrolyse montrant un empilement d'assemblages élémentaires ;
- la figure 4 illustre de façon plus détaillée un empilement de deux assemblages élémentaires successifs du dispositif illustré à la figure 2 ;
- la figure 5 illustre un premier exemple de réalisation d'un composant conducteur électrique anodique du dispositif d'électrolyse selon l'invention ;
- la figure 6 illustre un premier exemple de réalisation d'un composant conducteur électrique cathodique d'un dispositif d'électrolyse selon l'invention ;
- la figure 7 illustre un deuxième exemple de réalisation d'un composant conducteur électrique anodique du dispositif d'électrolyse selon l'invention;
- la figure 8 illustre un deuxième exemple de réalisation d'un composant conducteur électrique cathodique d'un dispositif d'électrolyse selon l'invention ;
- la figure 9 illustre schématiquement un demi-profil du conducteur électrique anodique de la figure 6 ;
- la figure 10 illustre schématiquement un demi-profil du conducteur électrique cathodique de la figure 7 ;
- la figure 11 illustre schématiquement un demi-profil du conducteur électrique selon le mode de réalisation des figures 7 et 8.

Dans toutes les figures, les éléments communs portent les mêmes numéros de référence sauf précision contraire.

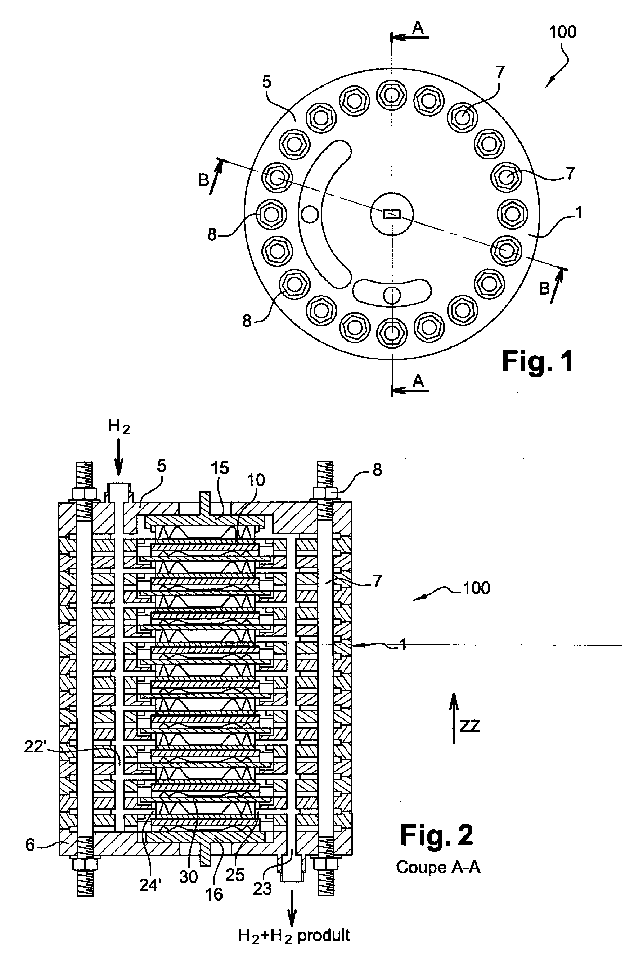

La figure 1 illustre en vue de dessus, un dispositif d'électrolyse 100 selon l'invention, formé par une pluralité d'assemblages élémentaires empilés dans un carter 1 formant un tube de confinement fermé. Un couvercle inférieur 6 et un couvercle supérieur 5 ferment le carter 1 et maintiennent l'ensemble solidaire.

Sur la figure 1 sont représentés les différents plans de coupe des figures 2, 3 et 4 suivantes.

La figure 2 illustre une première coupe frontale selon le plan A-A du dispositif d'électrolyse 100 selon l'invention illustré à la figure 1.

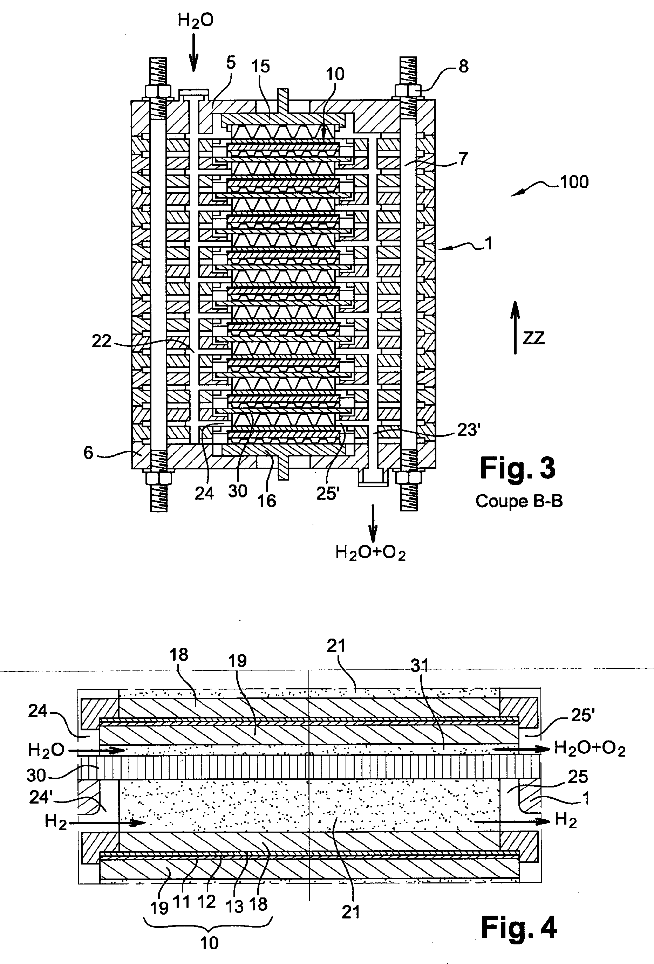

La figure 3 illustre une deuxième coupe frontale selon le plan B-B du dispositif d'électrolyse 100 selon l'invention illustré à la figure 1.

La figure 4 illustre de façon plus détaillée un empilement de deux assemblages élémentaires 10 successifs du dispositif 100 illustré à la figure 2, selon le premier plan de coupe A-A.

Le dispositif d'électrolyse 100 comporte un empilement d'une pluralité d'assemblages élémentaires 10 séparés par des plaques bipolaires 30. Neuf assemblages élémentaires 10 ont été représentés dans cet empilement, mais le nombre d'assemblages élémentaires n'est pas figé, un tel dispositif d'électrolyse pouvant comprendre un nombre quelconque d'assemblages élémentaires.

Chaque assemblage élémentaire 10 comporte au moins un ensemble appelé cellule électrolytique formée par une cathode 13, un électrolyte 12, et une anode 11, placés dans cet ordre du haut vers le bas, l'électrolyte 12 étant enserré entre l'anode 11 et la cathode 13.

La cathode 13 et l'anode 11 sont des électrodes poreuses conductrices électriquement alors que l'électrolyte 12 est une membrane, isolant électriquement, et conducteur ionique (anionique ou protonique), typiquement réalisé dans un matériau céramique.

Selon un premier exemple avantageux de réalisation de l'invention, l'assemblage élémentaire 10 comporte, outre la cellule électrolytique, deux couches de diffusion 18, 19 enserrant la cathode 13 et l'anode 11 de la cellule électrolytique et permettant notamment d'améliorer la diffusion des réactifs et l'évacuation des produits au contact des électrodes (anode et cathode). Les couches de diffusion 18, 19 sont des couches métalliques poreuses permettant également d'améliorer la répartition du potentiel électrique sur la cathode et/ou l'anode et de rigidifier la cellule électrolytique afin de supporter une éventuelle différence de pression à travers la cellule électrolytique.

Entre ces différents assemblages élémentaires 10 sont intercalées des plaques bipolaires (ou interconnecteurs) 30. Un connecteur de fermeture cathodique 15 ferme l'empilement dans sa partie supérieure, de même qu'un connecteur de support anodique 16 ferme l'empilement dans sa partie inférieure.

L'empilement est maintenu en position par le carter de confinement 1 qui entoure l'ensemble des assemblages 10, sur toute la hauteur de l'empilement, et qui comporte un couvercle supérieur 5 et un couvercle inférieur 6 bordant les extrémités du carter de confinement 1. L'ensemble est maintenu solidaire au moyen d'une pluralité de tirants 7 traversant verticalement le dispositif 100, seize dans l'exemple illustré aux figures 1, 2 et 3, et au moyen d'une pluralité d'écrous 8 aptes à exercer une pression de maintien sur les couvercles 5 et 6.

Le dispositif d'électrolyse 100 comporte en outre au moins un canal de distribution 22 des réactifs et au moins un canal d'évacuation 23 des produits traversant verticalement le dispositif d'électrolyse 100. Les canaux 22 et 23 communiquent respectivement avec des conduits d'amenés 24 et des conduits d'évacuation 25, sensiblement horizontaux, aptes à distribuer les réactifs ou à évacuer les produits issus de la réaction d'électrolyse au niveau de chaque électrode 11, 13 de chaque assemblage élémentaire 10 de l'empilement.

Le dispositif 100 représenté aux figures 1, 2, 3 et 4 est un électrolyseur à haute température comportant une membrane à conduction protonique. Toutefois, l'architecture du dispositif et l'empilement représenté sont applicables aussi bien à un électrolyseur comportant une membrane à conduction anionique qu'à un dispositif d'électrolyse de type pile à combustible ; les canaux de distribution des réactifs et d'évacuation des produits seront alors adaptés en fonction des réactifs à distribuer et des produits à évacuer au niveau de la cathode et de l'anode' de chaque assemblage élémentaire 10.

Dans l'exemple d'électrolyseur à membrane protonique illustré aux figures 1, 2, 3 et 4, le réactif est un gaz de vapeur d'eau (H₂O) amené au niveau de l'anode 11 par le canal d'amené 22 et le produit est du dihydrogène (H₂) récupéré au niveau de la cathode 13 et évacuée au moyen du canal d'évacuation 23. La réaction d'électrolyse produit également du dioxygène (O₂) au niveau de l'anode se mélangeant à la vapeur d'eau (H₂O) qui n'a pas réagi et qu'il est nécessaire d'évacuer. A cet effet, le dispositif 100 comporte un deuxième canal d'évacuation 23' pour l'évacuation du mélange vapeur d'eau-dioxygène (H₂O + O₂) coopérant avec un deuxième conduit d'évacuation 25' au niveau de l'anode 11 de l'assemblage élémentaire 10. Afin de créer un flux de gaz circulant au contact de la cathode 13 pour l'évacuation du dihydrogène (H₂) produit, de l'hydrogène est introduit dans le dispositif 100 au moyen d'un deuxième canal de distribution 22' et amené au niveau de la cathode 13 via un deuxième conduit d'amené 24'.

Les canaux 22, 22', 23 et 23' ainsi que les conduits 24, 25, 24' et 25' sont agencés de sorte qu'il y ait une séparation entre le flux de gaz entrant (H₂O) et le flux de gaz sortant (H₂ et O₂) ainsi qu'une séparation entre le flux de dihydrogène (H₂) et le flux de dioxygène (O₂), issus de la réaction d'électrolyse, afin d'éviter le mélange de ces deux gaz pouvant conduire à des risques d'inflammation ou d'explosion du dispositif. La séparation des différents gaz est notamment réalisée par la plaque bipolaire 30 étanche aux gaz.

Selon un mode préférentiel de l'invention, la plaque bipolaire 30 est une plaque épaisse de quelques millimètres d'épaisseur, typiquement comprise entre 4 et 6mm pour un électrolyseur de type SOEC, afin de supporter les éventuelles différences de pression de flux entre la partie anodique et la partie cathodique des assemblages élémentaires 10. La plaque bipolaire 30 est isolée électriquement du carter 1 par brasure ou par un moyen d'étanchéité isolant (non représenté).. Selon un mode préférentiel de l'invention, la plaque bipolaire 30 est formée dans un alliage de nickel, par exemple du type Inconel 625, Inconel 718, Nimonic 80A ou encore Haynes 230.

Afin d'assurer un bon contact électrique entre l'assemblage élémentaire 10 et les plaques bipolaires 30, le dispositif 100 comporte des composants conducteurs électriques 21 et 31 qui assurent un contact électrique entre chaque plaque bipolaire 30 et chaque assemblage élémentaire 10, les conducteurs électriques 21, 31 ayant une certaine élasticité dans le sens de l'épaisseur (selon l'axe ZZ).

Selon le premier mode de réalisation de l'invention, le dispositif d'électrolyse 100 comporte un conducteur électrique cathodique 21 en contact avec la face cathodique de l'assemblage élémentaire 10 et la face cathodique de la plaque bipolaire 30 et comporte un conducteur électrique anodique 31, plus fin que le conducteur électrique cathodique 21, en contact avec la face anodique de l'assemblage élémentaire 10 et la face anodique de la plaque bipolaire 30. Selon le mode de réalisation particulier illustré aux figures 2, 3, et 4, le conducteur électrique anodique 31 est plus fin que le conducteur électrique cathodique 21 ; toutefois, les conducteurs électriques 21 et 31 peuvent avoir indifféremment les mêmes épaisseurs ou des épaisseurs différentes, les épaisseurs des conducteurs électriques étant imposées par la conception du dispositif d'électrolyse.

Selon le mode de réalisation particulier représenté aux figures 2, 3 et 4, le conducteur électrique anodique 31 est en contact avec la couche de diffusion anodique 19 poreuse, au niveau de sa face supérieure, et avec la face anodique de la plaque bipolaire 30 au niveau de sa face inférieure.

Selon le même mode de réalisation, le conducteur électrique cathodique 21 est en contact avec la couche de diffusion cathodique 18 poreuse, au niveau de sa face inférieure, et avec la face cathodique de la plaque bipolaire 30 au niveau de sa face supérieure.

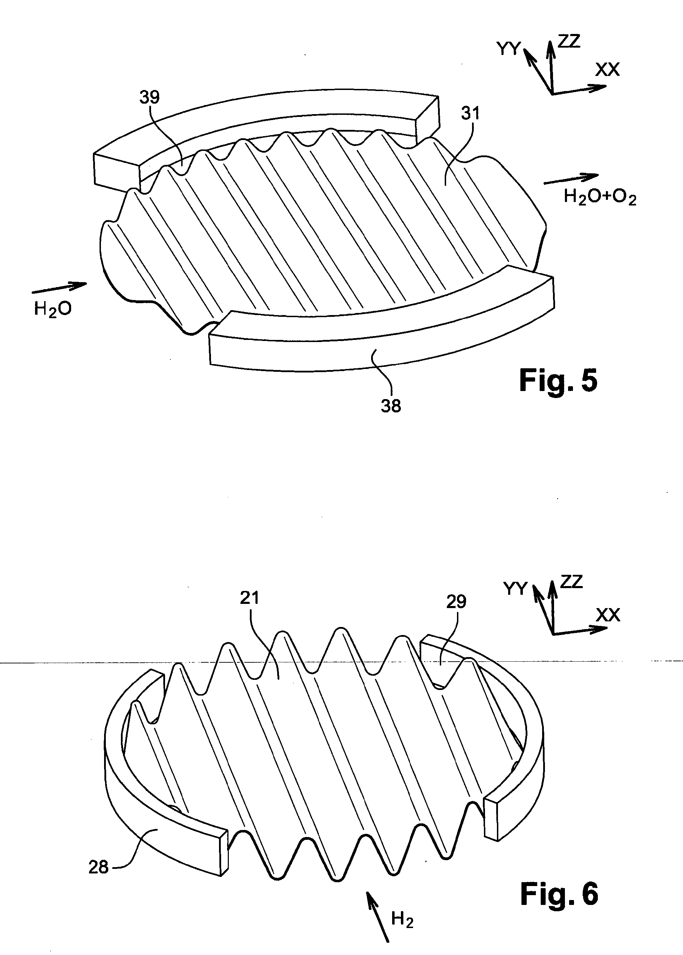

Un premier exemple de réalisation d'un conducteur électrique anodique 31 et d'un conducteur électrique cathodique 21 est représenté de façon plus détaillée respectivement aux figures 5 et 6.

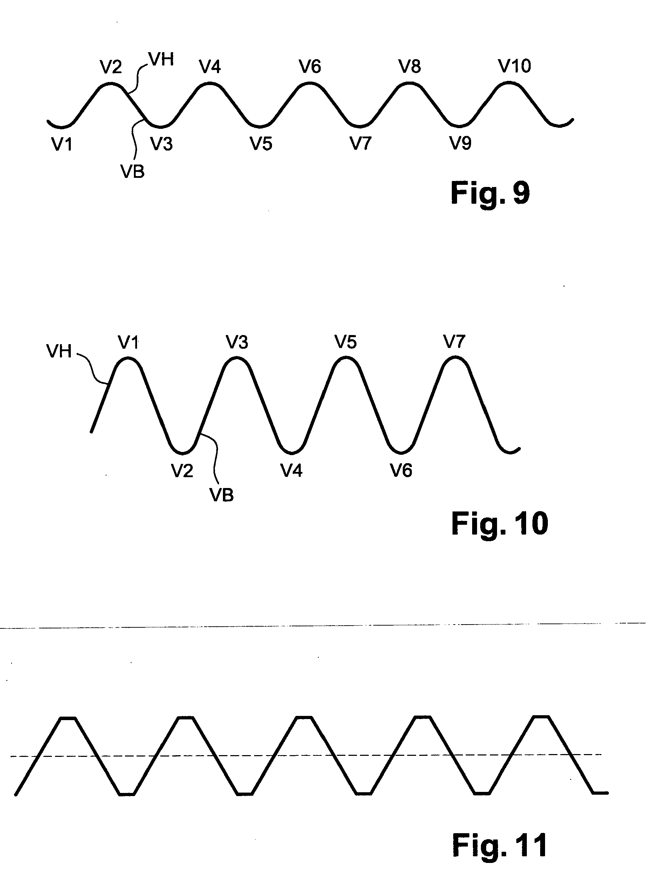

Le conducteur électrique anodique 31 est formé par une plaque ondulée, circulaire, dont la section selon un plan XX-ZZ suit une fonction sinusoïdale représentée en figure 9 et par un anneau métallique 39 entourant au moins partiellement la plaque ondulée.

La figure 5 représente le conducteur électrique anodique 31 entouré au moins partiellement par un anneau céramique 38 ; l'anneau céramique 38 encerclant concentriquement l'anneau métallique 39 du conducteur électrique anodique 31. L'anneau métallique 39 est un moyen de fixation entre le conducteur anodique 31 et l'anneau céramique 38, l'anneau métallique 39 étant brasé sur l'anneau céramique 38. D'autres moyens de fixation de l'anneau céramique 38, du type système de tenon mortaise ou encore par des moyens d'emboutissage sont également envisageables.

La forme circulaire du conducteur électrique anodique 31 est imposée par la forme d'ensemble du dispositif d'électrolyse, le dispositif d'électrolyse étant un dispositif de section circulaire.

Le conducteur électrique anodique 31 est une plaque ondulée de faible épaisseur de l'ordre de quelques dixièmes de millimètres, typiquement de 0,2mm et dont l'amplitude d'ondulation est comprise entre 4 et 20mm. On entend par une ondulation un mouvement oscillatoire formé alternativement par une vague haute VH et par une vague basse VB, suivant un axe parallèle à l'axe XX représenté à la figure 5. On entend par amplitude d'ondulation la distance séparant les projections du point maximum de la vague haute VH et du point minimum de la vague basse VB suivant l'axe ZZ.

Le premier exemple de réalisation du conducteur électrique anodique 31 illustré à la figure 5 comporte une succession de dix ondulations soit une alternance de dix vagues hautes VH et de dix vagues basses VB. La figure 9 illustre schématiquement la section du conducteur électrique anodique 31 ainsi que la position des différentes vagues, la vague V1 illustrant la vague centrale basse du conducteur électrique anodique 31, et la vague V10 représentant la vague extrême du conducteur.

On notera que le contact entre la face anodique de la plaque bipolaire 30 et la couche de diffusion anodique 19 est réalisé par les parties extrêmes de chaque vague haute VH et de chaque vague basse VB de chaque ondulation.

La forme sinusoïdale du conducteur électrique anodique 31 permet d'obtenir une élasticité dans le sens l'épaisseur, c'est-à-dire selon l'axe ZZ vertical, nécessaire à l'établissement et au maintien du contact électrique entre la plaque bipolaire 30 et l'assemblage élémentaire 10 lors de la mise en place des différents empilements.

En effet, lors de l'assemblage du dispositif d'électrolyse 100, les conducteurs électrique anodiques 31 sont légèrement déformés en compression, selon l'axe ZZ, de façon à garantir un contact électrique.

L'anneau céramique 38 et l'anneau métallique 39 sont situés à la périphérie du conducteur électrique anodique 31.

Selon le premier mode de réalisation représenté à la figure 5, non limitatif, l'anneau céramique 38 est divisé en deux portions d'anneaux circulaires distinctes et diamétralement opposées agencées de façon à créer une ouverture latérale de part et d'autre du conducteur électrique anodique 31 autorisant le passage du flux de gaz de vapeur d'eau selon la direction XX parallèle à l'ondulation du conducteur électrique anodique 31 ainsi que le passage du flux de gaz constitué par un mélange de vapeur d'eau (H₂O) et de dioxygène (O₂) résultant de la réaction d'électrolyse, le sens de circulation des flux de vapeur d'eau (H₂O) et du mélange vapeur d'eau/dioxygène étant représenté par des flèches sur la figure 5.

D'une façon générale, le conducteur électrique anodique 31 est réalisé dans un matériau ayant une bonne conductivité électrique à haute température (i.e. supérieure à 500°C) et comportant une faible résistance de contact avec les éléments anodiques et cathodiques des assemblages élémentaires 10. De plus, le conducteur électrique anodique 31 doit avoir une bonne résistance à la corrosion, comporter de bonnes propriétés de fluage, comporter une grande limite élastique à haute température ainsi que de bonnes propriétés de mise en forme et de soudage.

Ainsi, le conducteur électrique anodique 31 et l'anneau métallique 39 sont réalisés dans un alliage de nickel, du type Inconel 625, et l'anneau céramique 38 dans un matériau céramique identique au matériau céramique de l'électrolyte 12 ayant un coefficient de dilatation thermique α plus faible que le conducteur électrique anodique 31.

Ainsi, à titre d'exemple, le coefficient de dilatation thermique α du conducteur électrique en Inconel 625 est de 14,5×10⁻⁶*K*^{*-*1} alors que le coefficient thermique α de l'anneau céramique est de 11,8×10⁻⁶*K*⁻¹.

L'anneau céramique 38 en périphérie du conducteur électrique anodique 31 de plus faible dilatation thermique, permet ainsi de limiter la dilatation thermique du conducteur électrique anodique 31, principalement selon l'axe YY, lors du fonctionnement du dispositif d'électrolyse.

Dans une moindre mesure, l'anneau céramique 38, solidaire d'au moins une partie du conducteur électrique anodique 31, limite également, la dilatation thermique du conducteur électrique anodique 31 selon l'axe XX.

En plus de limiter la dilation thermique du conducteur électrique anodique 31 selon les axes XX et YY, l'anneau céramique 38 permet également d'amplifier la déformation verticale du conducteur électrique anodique 31 selon l'axe ZZ assurant un contact électrique permanent entre l'assemblage élémentaire 10 et la plaque bipolaire 30 à haute température (i.e. supérieure à 500°C).

Ainsi, la déformation dans l'épaisseur, selon l'axe ZZ, permet d'assurer le contact électrique entre l'assemblage élémentaire et la plaque bipolaire malgré la présence de défauts géométriques d'un tel assemblage, tels que les dispersions géométriques dues aux tolérances, les défauts de planéité, etc.

De plus, le conducteur électrique 31, dont la déformation selon l'axe ZZ --intervient avec l'augmentation de la température par l'effet de dilatation thermique, permet de réduire les précontraintes de pression à froid entre la plaque bipolaire et l'assemblage élémentaire lorsque le dispositif d'électrolyse n'est pas en fonctionnement.

La figure 9 illustre schématiquement la section d'un demi-profil du conducteur électrique anodique 31 sur laquelle les différentes vagues formant les ondulations sont référencées. La vague référencée V1 correspond à la vague centrale du conducteur électrique anodique 31 et la vague référencée V10 correspond à la dernière vague ; ainsi le conducteur électrique anodique 31 comporte au moins neufs vagues de part et d'autre de la vague centrale référencée V1.

Avantageusement, l'anneau céramique 38 de forme circulaire solidarise le conducteur électrique anodique 31 sur au moins cinq vagues successives de part et d'autre de la vague centrale V1.

De façon similaire à la description faite précédemment, le conducteur électrique cathodique 21 illustré à la figure 6 est formé par une plaque ondulée, circulaire, dont la section selon le plan XX-ZZ suit une fonction sinusoïdale représentée en figure 10 et par un anneau métallique 29 entourant au moins partiellement la plaque ondulée.

La figure 6 représente le conducteur électrique cathodique 21 entouré au moins partiellement par un anneau céramique 28 ; l'anneau céramique 28 encerclant concentriquement l'anneau métallique 29 du conducteur électrique cathodique 21. L'anneau métallique 29 est un moyen de fixation entre le conducteur cathodique 21 et l'anneau céramique 28, l'anneau métallique 29 étant brasé sur l'anneau céramique 28. D'autres moyens de fixation de l'anneau céramique 38, du type système de tenon mortaise ou encore par des moyens d'emboutissage sont également envisageables.

La forme circulaire du conducteur électrique cathodique 21 est imposée par la forme d'ensemble du dispositif d'électrolyse, le dispositif d'électrolyse étant un dispositif de section circulaire.

Le conducteur électrique cathodique 21 est une plaque ondulée de faible épaisseur de l'ordre de quelques dixièmes de millimètres, typiquement de 0,2mm et dont l'amplitude d'ondulation du conducteur électrique cathodique 21 est comprise entre 4 et 20 mm.

Le premier exemple de réalisation du conducteur électrique cathodique 21 illustré à la figure 6 comporte une succession de sept ondulations soit une alternance de sept vagues hautes VH et de sept vagues basses VB. La figure 10 illustre schématiquement la section du conducteur électrique cathodique 21 ainsi que la position des différentes vagues, la vague V1 illustrant la vague centrale haute du conducteur électrique cathodique 21.

On notera que le contact entre la face cathodique de la plaque bipolaire 30 et la couche de diffusion cathodique 18 est réalisé par les parties extrêmes de chaque vague haute VH et de chaque vague basse VB de chaque ondulation.

La forme sinusoïdale du conducteur électrique cathodique 21 permet d'obtenir une élasticité dans le sens l'épaisseur, c'est-à-dire selon l'axe vertical ZZ, nécessaire à l'établissement et au maintien du contact électrique entre la plaque bipolaire 30 et l'assemblage élémentaire 20 lors l'assemblage des différents empilements.

En effet, lors de l'assemblage du dispositif d'électrolyse 100, les conducteurs électrique cathodiques 21 sont légèrement déformés en compression, selon l'axe ZZ, de façon à garantir un contact électrique.

Selon le premier mode de réalisation représenté à la figure 6, non limitatif, l'anneau céramique 28 est divisé en deux portions circulaires distinctes et diamétralement opposées agencées de façon à créer une ouverture latérale de part et d'autre du conducteur électrique cathodique 21 autorisant le passage du flux de gaz de dihydrogène (H₂) selon la direction YY perpendiculaire à la direction de l'ondulation du conducteur électrique cathodique 21, le sens de circulation du flux de gaz de dihydrogène (H₂) étant représenté par une flèche sur la figure 6.

Ainsi, le conducteur électrique cathodique 21 et le conducteur électrique anodique 31 sont agencés de sorte que leurs ouvertures sont positionnées perpendiculairement l'une par rapport à l'autre, de façon à faciliter les amenées et les évacuations des flux de gaz dans le dispositif 100. Toutefois, selon la conception du dispositif d'électrolyse, il est possible d'agencer les conducteurs électriques 21 et 31 de sorte que leurs ouvertures respectives soient positionnées les unes par rapport aux autres selon un angle différent d'un angle de 90°.

D'une façon générale, le conducteur électrique cathodique 21 est réalisé avec les mêmes matériaux que le conducteur électrique anodique 31 décrits précédemment. On notera que le conducteur électrique cathodique 21 doit également avoir une bonne résistance à la fragilisation par hydrogène (H₂).

L'anneau céramique 28 en périphérie du conducteur électrique cathodique 21 et de plus faible dilatation thermique permet ainsi de limiter la dilatation thermique du conducteur électrique cathodique 21, et notamment selon l'axe XX, lors du fonctionnement du dispositif d'électrolyse 100.

Dans une moindre mesure, l'anneau céramique 28, solidaire d'au moins une partie du conducteur électrique cathodique 21, limite également, la dilatation thermique du conducteur électrique cathodique 21 selon l'axe YY.

En plus de limiter la dilation thermique du conducteur électrique cathodique 21 selon les axes XX et YY, l'anneau céramique 28 permet également d'amplifier la déformation verticale du conducteur électrique 21 selon l'axe ZZ assurant un contact électrique permanent entre l'assemblage élémentaire 10 et la plaque bipolaire 30 à haute température (i.e. supérieure à 500°)

De plus, le conducteur électrique, dont la déformation selon l'axe ZZ intervient avec l'augmentation de la température par effet de la dilatation thermique, permet de réduire les précontraintes de pression à froid entre la plaque bipolaire et l'assemblage élémentaire lorsque le dispositif d'électrolyse n'est pas en fonctionnement.

La figure 10 illustre schématiquement la section d'un demi-profil du conducteur électrique cathodique 21 sur laquelle les différentes vagues formant les différentes ondulations sont référencées. La vague référencée V1 correspond à la vague haute centrale, du conducteur électrique cathodique 21 et la vague référencée V7 correspond à la dernière vague, ainsi le conducteur électrique cathodique 21 comporte au moins six vagues de part et d'autre de la vague centrale référencée V1.

Avantageusement, l'anneau céramique 28 circulaire solidarise le conducteur électrique cathodique 21 au moins sur les deux dernières vagues de V5 à V7 du conducteur électrique cathodique 21.

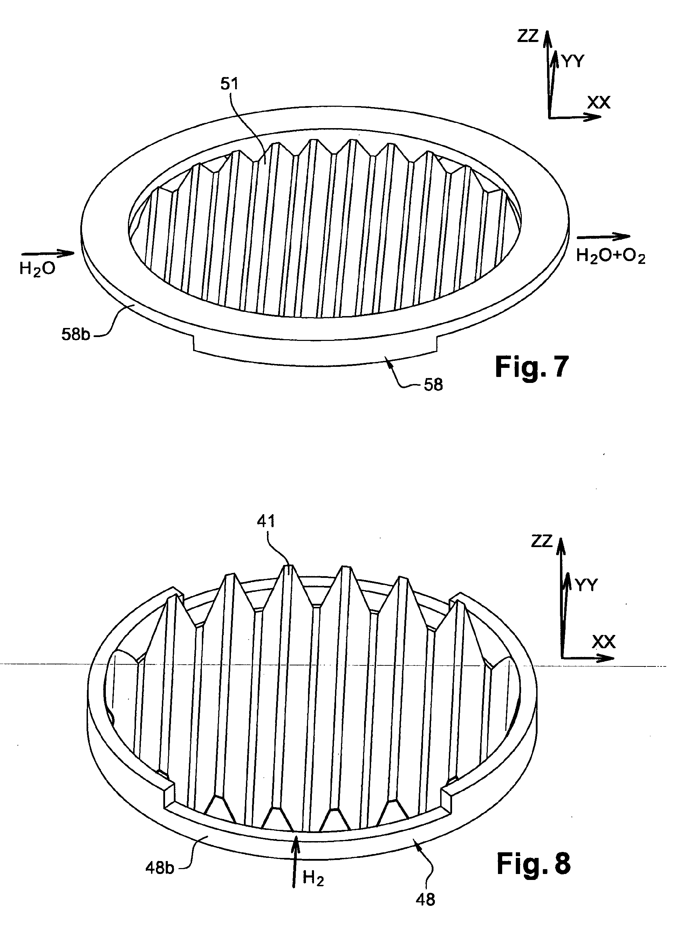

Les figures 7 et 8 illustrent un deuxième exemple de réalisation d'un conducteur électrique anodique 51 et d'un deuxième exemple de réalisation d'un conducteur électrique cathodique 41.

Les conducteurs anodique 51 et cathodique 41 selon les figures 7 et 8 reprennent les principales caractéristiques des conducteurs anodique 31 et cathodique 21 décrits précédemment aux figures 5 et 6. Il sera détaillé dans ce qui suit les éléments différents qui sont propres à ce deuxième mode de réalisation.

Dans ce deuxième mode de réalisation, les conducteurs électriques 51, 41 n'ont pas une section de forme sinusoïdale, mais une section sensiblement en forme d'accordéon, ou triangulaire, dont les extrémités sont écrêtées de façon à former des zones planes aptes au contact électrique entre la plaque bipolaire et l'assemblage élémentaire. La section, selon le plan XX-ZZ, des conducteurs électriques 51 et 41 est représentée schématiquement sur le graphique de la figure 11.

Dans ce deuxième mode de réalisation, les anneaux céramiques 58 et 48 sont des anneaux complets circulaires situés en périphérie des conducteurs électriques 51, 41.

Les anneaux céramiques 58, 48 circulaires comportent deux portions 58b, 48b de plus faible épaisseur de façon à créer une ouverture latérale de part et d'autre des conducteurs électriques 51, 41 pour le passage d'un flux de gaz.

Les portions 58b de plus faible épaisseur sont agencées de façon à permettre le passage du flux de gaz de vapeur d'eau (H₂0) et du flux de vapeur d'eau mélangé avec du dioxygène (H₂0 + O₂) selon la direction XX parallèle à l'ondulation du conducteur électrique anodique 51.

Les portions 48b de plus faible épaisseur sont agencées de façon à permettre le passage du flux de dihydrogène (H₂) selon la direction YY perpendiculaire à l'ondulation du conducteur électrique cathodique 41.

Ce deuxième mode de réalisation des anneaux céramiques 58, 48 permet ainsi d'améliorer la mise en place du conducteur électrique dans le dispositif d'électrolyse ainsi que de garantir une bonne tenue de celui-ci dans l'empilement.

De plus, ce mode de réalisation permet de faciliter le process de fabrication des conducteurs électriques.

Les conducteurs électriques, selon l'invention, sont réalisés typiquement par pliage, par formage ou par emboutissage.

Les anneaux céramiques selon l'invention permettent de contraindre les conducteurs électriques souples lors du fonctionnement du dispositif par l'utilisation de matériaux comportant des coefficients de dilatation thermiques différents. Le positionnement des anneaux céramiques et leurs dimensions permettent ainsi d'amplifier la déformation verticale selon l'axe ZZ sous l'effet de la dilatation thermique du conducteur électrique, la dilatation thermique selon les axes XX et YY étant en revanche limitée.

Les conducteurs électriques sont disposés dans le passage des flux de gaz entrants et sortant, leurs formes particulières permettant ainsi de ne pas obstruer le flux de circulation des gaz dans les conduits tout en minimisant la chute de pression.

De par sa forme et ses dimensions, le conducteur électrique anodique force le flux de vapeur d'eau à entrer dans la couche de diffusion anodique ou l'anode. De même, de par sa forme et ses dimensions le conducteur électrique cathodique permet le passage du flux de dihydrogène en limitant les chutes de pression.

De plus, le dispositif selon l'invention permet d'assurer une répartition uniforme des pressions de contact sur l'ensemble de la surface réactionnelle de l'assemblage élémentaire tout en réduisant les pressions de contact à froid sur l'assemblage élémentaire, et notamment sur la membrane électrolytique.

En outre, on notera que plus la pression de contact est importante plus la résistance électrique du dispositif est faible. Ainsi, le dispositif selon l'invention permet à la fois de ne pas sur-contraindre les empilements à froid, facilitant ainsi le montage d'un tel dispositif et à la fois d'absorber les irrégularités géométriques des empilements à haute température tout en réduisant les pertes électriques. L'invention a été principalement décrite pour un électrolyseur à haute température comportant une membrane à conduction protonique du type PCEC ((Protonic Ceramic Electrolyser Cell en langue anglaise) ; toutefois, l'invention est applicable aussi bien à des électrolyseurs de type PCEC qu'à des électrolyseurs de type SOEC (Solide Oxide Electrolyser Cell en langue anglaise). En effet, les deux types d'électrolyseurs sont des électrolyseurs fonctionnant à haute température et dans lesquelles des problèmes de différences de dilatation thermique entre la membrane et les électrodes peuvent apparaître.

L'invention a été principalement décrite pour un électrolyseur à haute température comportant une membrane à conduction protonique ; toutefois l'invention est applicable également aux piles à combustible, typiquement de type SOFC, auxquels sont directement applicables les développements technologiques des électrolyseurs à haute température.

## Revendications

1. Dispositif d'électrolyse (100) comportant :
- un assemblage élémentaire (10) formé par un élément membranaire (12) entouré de part et d'autre par une électrode (11, 13),
- une plaque conductrice rigide (30),
- au moins un conducteur électrique (21, 31, 41, 51) inséré entre ledit assemblage élémentaire (10) et ladite plaque conductrice rigide (30), ledit conducteur électrique (21, 31, 41, 51) étant formé par une plaque ondulée apte à se déformer et à assurer le contact électrique entre ledit assemblage élémentaire (10) et ladite plaque conductrice rigide (30) ;
ledit dispositif d'électrolyse (100) étant **caractérisé en ce qu'**il comporte un élément périphérique (28, 38, 48, 58) entourant au moins partiellement ledit conducteur électrique (21, 31, 41, 51), ledit élément périphérique (28, 38, 48, 58) étant réalisé dans un matériau dont le coefficient de dilatation thermique est inférieur au coefficient de dilatation thermique du matériau dudit conducteur électrique (21, 31, 41, 51).

2. Dispositif d'électrolyse (100) selon la revendication précédente **caractérisé en ce que** ledit élément périphérique est réalisé dans un matériau céramique.

3. Dispositif d'électrolyse (100) selon la revendication 2 **caractérisé en ce que** ledit matériau céramique est une céramique de même formule brute que ledit élément membranaire (12).

4. Dispositif d'électrolyse (100) selon l'une des revendications 1 à 3 **caractérisé en ce que** ledit élément périphérique (28, 38, 48, 58) comporte une première ouverture et une deuxième ouverture agencées de part et d'autre dudit conducteur électrique (21, 31, 41, 51), lesdites ouvertures autorisant la circulation d'un fluide au travers dudit conducteur électrique (21, 31, 41, 51).

5. Dispositif d'électrolyse (100) selon l'une des revendications 1 à 4 **caractérisé en ce que** ledit élément périphérique (28, 38) est formé par deux portions d'anneaux se faisant face.

6. Dispositif d'électrolyse (100) selon l'une des revendications 1 à 4 **caractérisé en ce que** ledit élément périphérique (48, 58) est un anneau complet circulaire comportant deux portions de plus faible épaisseur se faisant face.

7. Dispositif d'électrolyse (100) selon l'une des revendications 1 à 6 **caractérisé en ce que** ledit au moins un conducteur électrique (21, 31, 41, 51) est solidaire au moins partiellement dudit élément périphérique (28, 38, 48, 58).

8. Dispositif d'électrolyse (100) selon l'une des revendications 1 à 7 **caractérisé en ce que** ledit élément périphérique (38, 58) solidarise au moins dix vagues dudit au moins un conducteur électrique (31, 51).

9. Dispositif d'électrolyse (100) selon l'une des revendications 1 à 7 **caractérisé en ce que** ledit élément périphérique (28, 48) solidarise au moins les deux dernières vagues de chaque extrémité de l'ondulation dudit au moins un conducteur électrique (21, 41).

10. Dispositif d'électrolyse (100) selon l'une des revendications 1 à 9 **caractérisé en ce que** ledit au moins un conducteur électrique (21, 31) comporte une section définissant un mouvement oscillatoire périodique de forme sinusoïdale.

11. Dispositif d'électrolyse (100) selon l'une des revendications 1 à 9 **caractérisé en ce que** ledit au moins un conducteur électrique (41, 51) comporte une section définissant un mouvement oscillatoire périodique de forme triangulaire ou triangulaire écrêtée.

12. Dispositif d'électrolyse (100) selon l'une des revendications 1 à 11 **caractérisé en ce que** ledit conducteur électrique (21, 31, 41, 51) est réalisé dans un matériau en alliage de Nickel et/ou en acier inoxydable.

13. Dispositif d'électrolyse selon l'une des revendications 1 à 12 **caractérisé en ce qu'**il comporte une succession d'empilements formés par :
- une plaque conductrice rigide (30) ;
- un premier conducteur électrique (31, 51) anodique en contact avec ladite plaque conductrice (30) entouré au moins partiellement par un premier élément périphérique (38, 58) ;
- un assemblage élémentaire (10) formé par un élément membranaire (12) entouré d'une anode (11) et d'une cathode (13), ladite anode étant en contact avec ledit conducteur électrique anodique (31, 51);
- un deuxième conducteur électrique (21, 41) cathodique en contact avec la cathode (13) de l'assemblage élémentaire (10) entouré au moins partiellement par un deuxième élément périphérique (28, 48).

14. Dispositif d'électrolyse selon la revendication 13 **caractérisé en ce que** :
- ledit premier élément périphérique (38, 58) comporte une première ouverture et une deuxième ouverture agencées de part et d'autre dudit premier conducteur électrique (31, 51) anodique ;
- ledit deuxième élément périphérique (28, 48) comporte une première ouverture et une deuxième ouverture agencées de part et d'autre dudit premier conducteur électrique (21, 41) cathodique ;
ledit premier élément périphérique (38, 58) et ledit deuxième élément périphérique (28, 48) étant agencés de sorte que lesdites ouvertures dudit premier élément périphérique (38, 58) sont perpendiculaires aux dites ouvertures dudit deuxième élément périphérique (28, 48).

## Patentansprüche

1. Elektrolysevorrichtung (100) bestehend aus:
- einer Basisstruktur gebildet aus einen membranartigen Element (12), das auf beiden Seiten von einer Elektrode (11, 13) umgeben ist,
- einer steifen Leiterplatte (30),
- mindestens einem elektrischen Leiter (21, 31, 41, 51), der zwischen der genannten Basisstruktur (10) und der genannten steifen Leiterplatte (30) sitzt, wobei der elektrische Leiter (21, 31, 41, 51) aus einer gewellten Platte besteht, die sich verformen und den elektrischen Kontakt gewährleisten kann zwischen der genannten Basisstruktur (10) und der genannten steifen Leiterplatte (30);
wobei die genannte Elektrolysevorrichtung (100) **dadurch gekennzeichnet ist, dass** sie ein peripheres Element (28, 38, 48, 58) umfasst, das den genannten elektrischen Leiter (21, 31, 41, 51) zumindest teilweise umgibt, wobei das genannte periphere Element (28, 38, 48, 58) aus einem Material besteht, dessen Wärmeausdehnungskoeffizient kleiner ist als der Wärmeausdehnungskoeffizient des Materials des genannten elektrischen Leiters (21, 31, 41, 51).

2. Elektrolysevorrichtung (100) gemäß dem vorangehenden Anspruch, **dadurch gekennzeichnet, dass** das genannte periphere Element aus einem keramischen Material besteht.

3. Elektrolysevorrichtung (100) gemäß Anspruch 2, **dadurch gekennzeichnet, dass** das genannte keramische Material eine Keramik mit der gleichen Rohformel wie das genannte membranartige Element (12) ist.

4. Elektrolysevorrichtung (100) gemäß einem der Ansprüche 1 bis 3, **dadurch gekennzeichnet, dass** das genannte periphere Element (28, 38, 48, 58) eine erste Öffnung und eine zweite Öffnung aufweist, die auf der einen und der anderen Seite des genannten elektrischen Leiters (21, 31, 41, 51) angeordnet sind, wobei die genannten Öffnungen den Durchfluss eines Mediums durch den genannten elektrischen Leiter (21, 31, 41, 51) gestatten.

5. Elektrolysevorrichtung (100) gemäß einem der Ansprüche 1 bis 4, **dadurch gekennzeichnet, dass** das genannte periphere Element (28, 38) aus zwei sich gegenüberliegenden Ringabschnitten gebildet wird.

6. Elektrolysevorrichtung (100) gemäß einem der Ansprüche 1 bis 4, **dadurch gekennzeichnet, dass** das genannte periphere Element (48, 58) ein völlig runder Ring ist, der zwei sich gegenüberliegende Abschnitte von geringerer Stärke aufweist.

7. Elektrolysevorrichtung (100) gemäß einem der Ansprüche 1 bis 6, **dadurch gekennzeichnet, dass** der genannte mindestens eine elektrische Leiter (21, 31, 41, 51) zumindest teilweise mit dem genannten peripheren Element (28, 38, 48, 58) fest verbunden ist.

8. Elektrolysevorrichtung (100) gemäß einem der Ansprüche 1 bis 7, **dadurch gekennzeichnet, dass** das genannte periphere Element (38, 58) mindestens zehn Wellen des genannten mindestens einen elektrischen Leiters (31, 51) fest miteinander verbindet.

9. Elektrolysevorrichtung (100) gemäß einem der Ansprüche 1 bis 7, **dadurch gekennzeichnet, dass** das genannte periphere Element (28, 48) mindestens die letzten beiden Wellen jedes Endes der Wellung des genannten mindestens einen elektrischen Leiters (21, 41) fest miteinander verbindet.

10. Elektrolysevorrichtung (100) gemäß einem der Ansprüche 1 bis 9, **dadurch gekennzeichnet, dass** der genannte mindestens eine elektrische Leiter (21, 31) einen Abschnitt aufweist, der eine sinusförmige periodische Oszillationsbewegung definiert.

11. Elektrolysevorrichtung (100) gemäß einem der Ansprüche 1 bis 9, **dadurch gekennzeichnet, dass** der genannte mindestens eine elektrische Leiter (41, 51) einen Abschnitt aufweist, der eine dreieckige oder spitzenlose dreieckige periodische Oszillationsbewegung definiert.

12. Elektrolysevorrichtung (100) gemäß einem der Ansprüche 1 bis 11, **dadurch gekennzeichnet, dass** der genannte elektrische Leiter (21, 31, 41, 51) aus einer Nickellegierung und/oder aus Edelstahl besteht.

13. Elektrolysevorrichtung gemäß einem der Ansprüche 1 bis 12, **dadurch gekennzeichnet, dass** sie aus einer Folge von Stapeln gebildet wird, bestehend aus:
- einer steifen Leiterplatte (30);
- einem ersten anodischen elektrischen Leiter (31, 51), der mit der genannten Leiterplatte (30) in Kontakt steht und zumindest teilweise von einem ersten peripheren Element (38, 58) umgeben wird;
- einer Basisstruktur (10), gebildet aus einem membranartigen Element (12), umgeben von einer Anode (11) und einer Kathode (13), wobei die genannte Anode in Kontakt steht mit dem genannten anodischen elektrischen Leiter (31, 51);
- einem zweiten kathodischen elektrischen Leiter (21, 41), der mit der Kathode (13) der Basisstruktur (10) in Kontakt steht und zumindest teilweise von einem zweiten peripheren Element (28, 48) umgeben wird.

14. Elektrolysevorrichtung gemäß Anspruch 13, **dadurch gekennzeichnet, dass**:
- das genannte erste periphere Element (38, 58) eine erste Öffnung und eine zweite Öffnung aufweist, die auf der einen und der anderen Seite des genannten ersten anodischen elektrischen Leiters (31, 51) angeordnet sind;
- das genannte zweite periphere Element (28, 48) eine erste Öffnung und eine zweite Öffnung aufweist, die auf der einen und der anderen Seite des genannten ersten kathodischen elektrischen Leiters (21, 41) angeordnet sind;
wobei das genannte erste periphere Element (38, 58) und das genannte zweite periphere Element (28, 48) so angeordnet sind, dass die genannten Öffnungen des genannten ersten peripheren Elements (38, 58) lotrecht zu den genannten Öffnungen des genannten zweiten peripheren Elements (28, 48) verlaufen.

## Claims

1. Electrolysis device (100) comprising:
- an elementary assembly (10) formed by a membrane element (12) bordered on either side by an electrode (11, 13),
- a rigid conducting plate (30),
- at least one electrical conductor (21, 31, 41, 51) inserted between said elementary assembly (10) and said rigid conducting plate (30), said electrical conductor (21, 31, 41, 51) being formed by a corrugated plate capable of deforming and making electrical contact between said elementary assembly (10) and said rigid conducting plate (30);
said electrolysis device (100) being **characterised in that** it comprises a peripheral element (28, 38, 48, 58) at least partially surrounding said electrical conductor (21, 31, 41, 51), said peripheral element (28, 38, 48, 58) being made from a material having a lower coefficient of thermal expansion than the the coefficient of thermal expansion of said electrical conductor material (21, 31, 41, 51).

2. Electrolysis device (100) according to the previous claim **characterised in that** said peripheral element is made from a ceramic material.

3. Electrolysis device (100) according to claim 2, **characterised in that** said ceramic material is a ceramic with the same empirical formula as said membrane element (12).

4. Electrolysis device (100) according to any one of claims 1 to 3, **characterised in that** said peripheral element (28, 38, 48, 58) comprises a first opening and a second opening arranged on each side of said electrical conductor (21, 31, 41, 51), said openings allowing circulation of a fluid through said electrical conductor (21, 31, 41, 51).

5. Electrolysis device (100) according to one of claims 1 to 4, **characterised in that** said peripheral element (28, 38) is made up of two ring segments positioned opposite one another.

6. Electrolysis device (100) according to one of claims 1 to 4, **characterised in that** said peripheral element (48, 58) is a complete circular ring comprising two thinner portions positioned opposite one another.

7. Electrolysis device (100) according to one of claims 1 to 6, **characterised in that** said at least one electrical conductor 21, 31, 41, 51) is permanently joined at least in part to the peripheral element (28, 38, 48, 58).

8. Electrolysis device (100) according to any one of claims 1 to 7, **characterised in that** said peripheral element (38, 58) attaches at least ten waves of said at least one electrical conductor (31, 51).

9. Electrolysis device (100) according to one of claims 1 to 7, **characterised in that** said peripheral element (28, 48) attaches at least the last two waves at each end of the corrugation of said at least one electrical conductor (21, 41).

10. Electrolysis device (100) according to one of claims 1 to 9, **characterised in that** said at least one electrical conductor (21, 31) comprises a section defining a periodic sinusoidal shaped oscillating movement.

11. Electrolysis device (100) according to one of claims 1 to 9, **characterised in that** said at least one electrical conductor (41, 51) comprises a section defining a periodic triangular or clipped triangular shaped oscillating movement.

12. Electrolysis device (100) according to one of claims 1 to 11, **characterised in that** said electrical conductor ((21, 31, 41, 51) is made from a Nickel alloy and/or stainless steel material.

13. Electrolysis device according to one of claims 1 to 12, **characterised in that** it comprises a series of stacks formed from:
- a rigid conducting plate (30);
- a first anodic electrical conductor (31, 51) in contact with said conducting plate (30) at least partially surrounded by a first peripheral element (38, 58);
- an elementary assembly (10) formed from a membrane element (12) bordered on either side by an anode (11) and a cathode (13), said anode being in contact with said anodic electrical conductor (31, 51);
- a second cathodic electrical conductor (21, 41) in contact with the cathode (13) of the elementary assembly (10) surrounded at least partially by a second peripheral element (28, 48).

14. Electrolysis device according to claim 13, **characterised in that**:
- said first peripheral element (38, 58) comprises a first opening and a second opening formed on each side of said first anodic electrical conductor (31, 51);
said second peripheral element (28, 48) comprises a first opening and a second opening formed on each side of said first cathodic electrical conductor (21, 41), said first peripheral element (38, 58) and said second peripheral element (28, 48) being arranged such that said openings in said first peripheral element (38, 58) are perpendicular to said openings in said second peripheral element (28, 48).
